# EUROPEAN PATENT APPLICATION

(11) **EP 0 725 390 A2**
(43) Date of publication of application: **07.08.1996**
(21) Application number: 96300166.4
(22) Date of filing: 09.01.1996
(51) Int. Cl.: G11B 5/48, G11B 21/08

(54) **Suspension assembly structure and method for a disk drive system**

(30) Priority: 11.01.1995 JP 2765/95
(71) Applicant: International Business Machines Corporation, Armonk, N.Y. 10504 (US)
(72) Inventor: Aoyagi, Akihiko, Fujisawa-shi, Kanagawa-ken (JP); Ohta, Mutsuro, Ebina-shi, Kanagawa-ken (JP); Hashi, Nobuyuki, Fujisawa-shi, Kanagawa-ken (JP); Tsujino, Hitoshi, Fujisawa-shi, Kanagawa-ken (JP)
(74) Representative: Horner, David Richard

(57) **Abstract**

The present invention provides a technique for stabilizing a swage configuration in the suspension assembly of a disk drive system. To attach a suspension 10 having a signal conversion head to the actuator 9, the end of the suspension 10 opposite the end to which the head is attached is preferably connected to a mount plate 10b for fixation. The inner diameter of the swaging boss in this mount plate 10b differs with upper and lower opposed surfaces of an actuator arm 9a. After positioning the mount plates with bosses of a larger inner diameter and performing a first swage step, mount plates of a smaller inner diameter are positioned and a second swage step is performed from a different direction to the first swage step. Even when performing a bidirectional swage onto suspensions attached to both upper and lower surfaces of the actuator arm, a boss caulked with the first swage is subjected to no deformation with a later swage and therefore a stable swage is possible.

## Description

### Field of the Invention

The present invention relates to a disk drive system and more particularly, to a suspension assembly structure for attaching a suspension supporting a signal conversion head to an actuator for positioning the signal conversion head at a predetermined position on the recording surface.

### Background art

A magnetic disk drive system typically has a housing within which contaminants such as dust are controlled, the housing typically accommodating: one or multiple magnetic disks with recording surfaces on both sides; a spin motor for rotating each magnetic disk at a high speed of 1,000 rps; a signal conversion head floating at the order of submicrons above the recording surface of a magnetic disk during high-speed rotation for writing data or reading data; and precision equipment in the form of an actuator for positioning the signal conversion head to a desired recording track disposed at intervals of submicrons on the recording surface of the magnetic disk. The housing is designed to protect all these items from the external dusty environment. In view of the generation of heat, connection to the exterior, and space, electronic circuits for controlling the equipment inside the housing, including one for controlling the write/read of data to/from the magnetic disk via the signal conversion head, one for controlling the movement of an actuator, and one for controlling the spin motor for rotating a magnetic disk, are loaded outside the housing.

When seeking a thinner magnetic disk drive system, it is important to determine how to reduce the thickness of the whole housing by individually obtaining thin-shaped equipment to be accommodated in the housing. In particular, the structure for attaching a signal conversion head disposed for each recording surface of the magnetic disk to an actuator travelling toward a desired position on the recording surface determines the size of an interval between the magnetic disks to be stacked. Furthermore, since a signal conversion head is disposed above the top layer or below the bottom layer of the magnetic disk, the structure for attaching the signal conversion head to the actuator forms an important factor for determining the thickness of the whole housing.

In the prior art, a swage of, what is called, caulking has often been used to attach the other end of a suspension supporting a signal conversion head installed on one end to the actuator. This is used to press and fasten the periphery of a boss to the inner face of the through hole in an actuator arm by inserting the boss with an opening formed on the other end of a suspension into the through hole formed on the actuator arm, and passing a ball of a little larger size than the inner diameter of the opening of the boss therethrough.

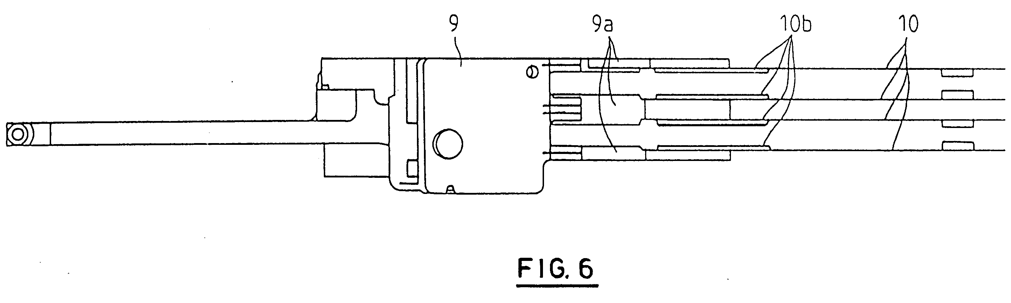

Figures 6 to 8 show conventional suspension assembly structures. Figure 6 shows a structure in which a plurality of suspensions 10 are attached to an actuator 9. The actuator 9 on the attachment side of the mount plates 10b in these suspensions 10 has comb-shaped actuator arms 9a made of Al, on which a plurality of through holes 9b are coaxially provided.

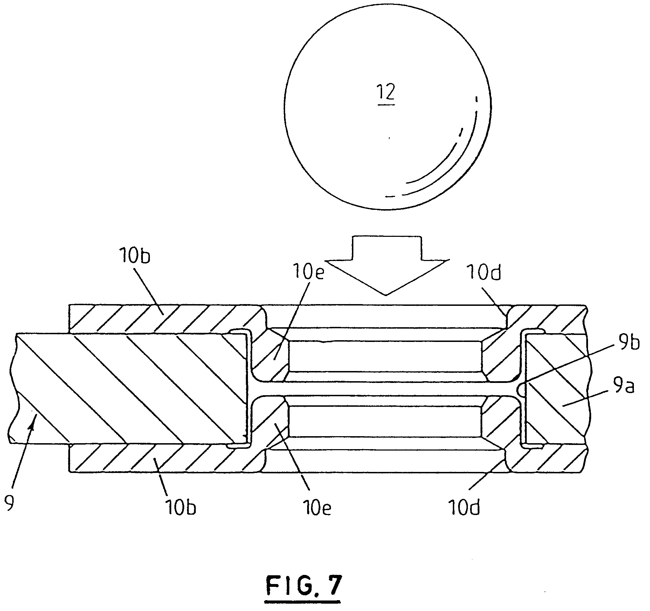

A method for attaching this suspension 10 to the actuator 9 will be described. As shown in Figure 7, bosses 10e in the mount plate 10b of the suspension 10 are inserted from the respective opening ends in the through holes 9b of actuator arms 9a. The inner diameter of these through holes 9b is larger by a slight degree, e.g., the order of microns, than the outer diameter of bosses 10e. A steel ball of a slightly large diameter than the inner diameter of a boss 10e is pressed into the through hole 10d of an upper mount plate 10b, penetrates down through the through hole 9b of the actuator arm 9a, and goes out from the through hole 10d of a lower mount plate 10b. At this time, the upper and lower bosses 10 e are enlarged and their outer face are fastened by pressure to the inner face of the through hole 9b of the actuator arm 9a, thereby providing fixation.

As shown in Figure 8, if this manipulation is simultaneously made to other through holes 9b of the actuator arm 9a for a multiple suspension assemble structure, a plurality of suspensions 10 can be attached to the actuator 9 at one time. In this case, there is a monodirectional swage process, in which a ball is passed in an UP-DOWN direction only once while positioning suspensions against the upper and lower surfaces of the actuator arm, and a bidirectional swage process in which a swage in the DOWN-UP direction is performed while positioning the suspension on another surface of the actuator arm after performing a swage in the UP-DOWN direction while setting the suspension only on one surface of the actuator arm. The bidirectional swage is advantageous in that each suspension is subjected to a deformation of caulking but also has the defects described later.

This suspension swaging assembly structure is made by penetrating a ball through the opening of a boss and has a problem in that a change in the shape of the boss occurs with the penetration, resulting in a change in the load of a head suspension assembly (HSA).

A change in the load of a HSA brings about a change in the flying height of a slider carrying the signal conversion head. There are problems in that a greater flying height of a slider makes it impossible to read or write a signal on the disk, whereas a lower flying height brings about a danger of contact between the disk and converter, thereby shortening the life of the disk drive system. At present, there is no method for avoiding these problems completely, but as a current countermeasure, a change in the load due to a swage is predicted and a regulating load corresponding to this predicted change in load is added at the stage of head suspension assembly.

When attaching a suspension to both sides of the actuator arm, a bidimensional swage is often performed in which, after fixing a suspension on one surface of the actuator arm and performing a swage fixation by penetrating a ball from the fixed surface of the suspension, another suspension is fixed on the other opposed surface and a ball is penetrated from the opposite direction for swage fixation as described above. In this case, two swaging steps are performed on one suspension and so a change in load attributed to the swage process differs with individual suspensions. It is difficult to regulate a change in load by the above-mentioned prediction of a change in load and so the regulation of this change in load is regarded as difficult.

It is hence an object of the present invention to alleviate the above described problems which occur when employing conventional methods to attach a suspension to an actuator, and to provide a stable structure for attaching a suspension to an actuator.

### Summary of the Invention

Viewed from a first aspect the present invention provides a disk drive system comprising: a disk with a recording surface; a suspension arranged to support at one end a signal conversion head for writing/reading data to/from the recording surface; and an actuator for attaching the other end of said suspension thereto and for positioning said signal conversion head at a desired position on said recording surface; the system further comprising: a structure for attaching the suspension to the actuator, a boss having an opening formed in said other end of the suspension being inserted into an opening formed on an actuator arm forming a suspension assembly portion of said actuator, said suspension being fixed to said actuator arm by swaging, wherein the inner diameter of an opening formed in said boss for swaging differs in the opposed face of said actuator arm to which said suspension is attached.

Viewed from a second aspect, the present invention provides a method of constructing a disk drive system having a disk with a recording surface, a suspension arranged to support at one end a signal conversion head for writing/reading data to/from the recording surface, and an actuator for attaching the other end of the suspension thereto, and for positioning said signal conversion head at a desired position on said recording surface, the method comprising the steps of: inserting a boss having an opening of a first inner diameter formed at said other end of a first suspension into a first face side of an opening formed on an actuator arm, the actuator arm forming a suspension attaching portion of said actuator; passing a first object having a slightly larger diameter than said first inner diameter through the boss of said first diameter to fix said suspension to said actuator arm; inserting a boss having an opening of a second inner diameter smaller than the first diameter formed at said other end of a second suspension into a second face opposite the first face of an opening formed on the actuator arm; and passing a second object having a slightly larger diameter than said second inner diameter through the boss of said second diameter to fix said suspension to said actuator arm.

The present invention provides a structure for attaching a suspension to an actuator that enables a stable attachment to be obtained in a structure for attaching suspensions to both sides of an actuator arm. Further, the swaging structure provided for attaching a suspension to an actuator enables a reduced change in load.

Preferably, the bosses for swaging are formed on mount plates connected and fixed to the suspensions. Further, in preferred embodiments, the openings of an actuator arm are a plurality of through holes coaxially provided and a suspension is attached to each of the plurality of openings in these through holes.

If an actuator has two or more actuator arms having openings coaxially formed on the actuator, the method preferably comprises the steps of: inserting bosses formed on said other end of a plurality of said first suspensions into one face of openings in said plurality of actuator arms and passing a first object having a slightly larger diameter than said first diameter through openings of said plurality of bosses to fix a plurality of first suspensions; and inserting bosses formed on said other end of a plurality of second suspensions into faces of openings opposite a fixed face of said first suspension for each of said plurality of actuator arms and passing a second object having a slightly larger diameter than said second inner diameter through openings of said plurality of bosses to fix said plurality of second suspensions.

In preferred embodiments, the method further comprises the initial steps of: connecting the first suspension to a first mount plate having the boss of said first inner diameter; and connecting the second suspension to a second mount plate having the boss of said second inner diameter smaller than the first inner diameter.

Preferably, the first and second objects are balls.

According to the structure and method for attaching a suspension to an actuator according to the present invention, a stable structure for attaching the suspension to the actuator is enabled. Furthermore, a reduction in the change in load is achievable in a method for attaching the suspension to the actuator.

### Brief Description of the Drawings

The present invention will be described further, by way of example only, with reference to a preferred embodiment thereof as illustrated in the accompanying drawings, in which:
Figure 1 is an exploded perspective view of a magnetic disk drive system according to one embodiment of the present invention;
Figure 2 is a plan view of a suspension according to this embodiment;
Figure 3 is an elevational view partly in section of a suspension according to this embodiment;
Figure 4 is a perspective view illustrating a suspension assembly structure according to this embodiment;
Figure 5 is a sectional view illustrating a suspension assembly method according to this embodiment;
Figure 6 is a sectional view illustrating a conventional suspension assembly structure;
Figure 7 is a sectional view illustrating a conventional suspension assembly method; and
Figure 8 is a sectional view illustrating a conventional suspension assembly structure.

### Description of Embodiment

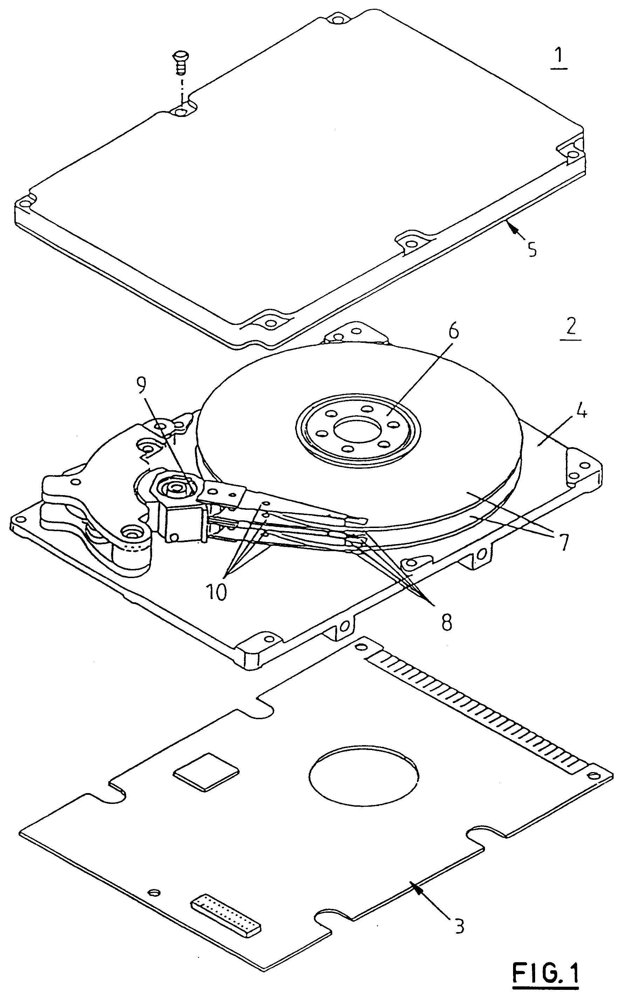

Figures 1 to 5 show one embodiment of the present invention. First, referring to Figure 1, the magnetic disk drive system 1 has a housing 2 and a card 3 with an electronic control circuit attached to the bottom thereof. The housing 2 comprises a base board 4 and a cover 5. The housing 2 accommodates a spin motor 6 supported on the base board 4, a plurality of magnetic disks 7 to be rotated via the spin motor 6, a slider 8 supporting signal conversion heads (not shown) for writing or reading data from or to recording surfaces of the magnetic disks 7 and facing each recording surface of the magnetic disks 7, a plurality of suspensions with the respective slider 8 attached to one end of each of them, and an actuator 9 attaching the other end of these suspensions 10 thereto and rotatably supported on the base board 4 for positioning a signal conversion head (not shown) at one desired track on the recording surface of a magnetic disc 7. The base board 4 and cover 5 can be sealed and form a dust-control environment isolated from the exterior in the housing 2. The exterior and the interior of the housing 2 are connected through a breezer filter not shown in such a manner that no pressure difference occurs.

For reducing the thickness of the whole magnetic disk drive system 1, it is required to thin the housing 2 and accordingly each piece of equipment to be accommodated in the housing must be thinned as much as possible. As is readily apparent, a structure for attaching a suspension 10 (assembled with a signal conversion head to be disposed adjacent each recording surface of the magnetic disks 7) to the actuator 9 determines the width of a gap between the magnetic disks 7 and further determines the top and bottom of movement of equipment in the housing 2 because suspensions 10 are disposed above the top layer and below the bottom layer of magnetic disks 7. For this reason, thinning each piece of equipment in the housing 2 by working out the suspension assembly structure is important for reducing the thickness of the whole magnetic disk drive system 1. Furthermore, a certain degree of rigidity must be held in this assembly structure to increase the rate of access, and so the attachment portion cannot be extremely thinned. In addition, the assembly process is also required to be uncomplicated.

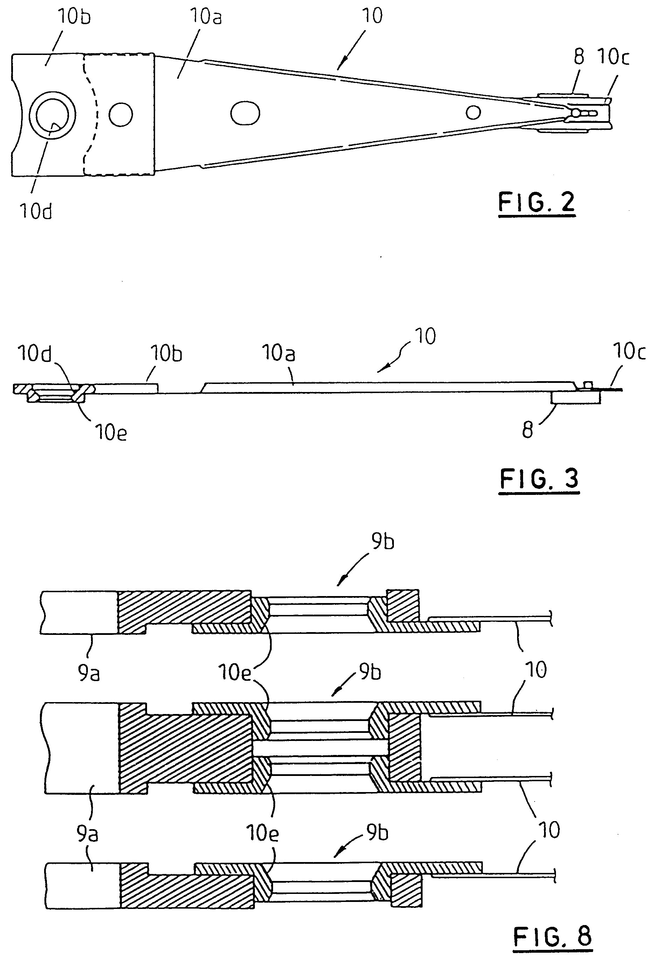

Figures 2 and 3 show a suspension 10 having the suspension assembly structure according to the embodiment. A suspension 10 comprises a stainless steel load beam 10a of near triangular shape and a stainless steel mount plate 10b which is attached to the base part of the load beam 10a by spot welding. To the tip part of the load beam 10a, a slider 8 assembled with a signal conversion head is attached via a stainless steel flexture 10c attached by spot welding. The slider 8 is opposed to the recording surface of a magnetic disk. Near the center of a mount plate 10b, a through hole 10d is provided. To the rim of a through hole 10d on the same side of the mount plate 10b as the slider 8 assembled with a signal conversion head, a boss 10e on the cylinder is attached.

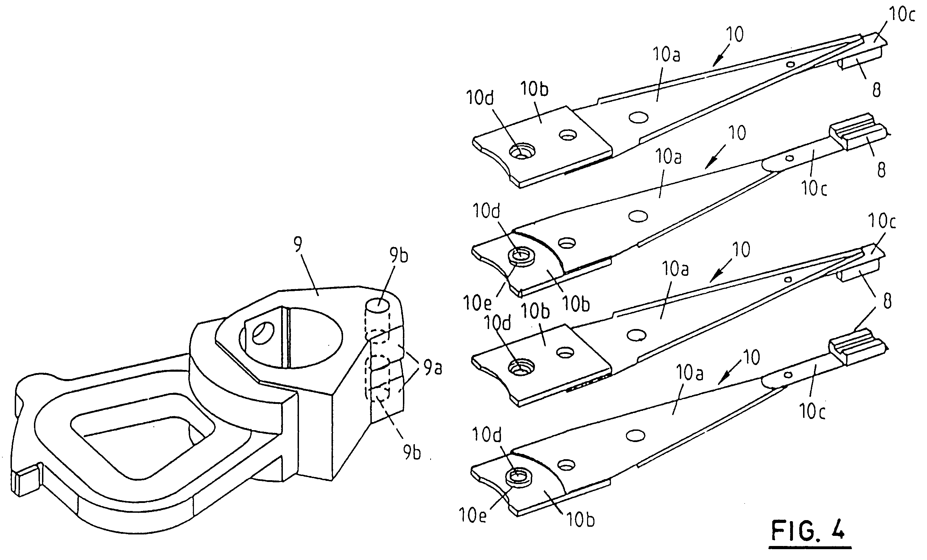

The actuator 9 on the attached side of the mount plate 10b in this suspension 10 has an Al actuator arm 9a of comb section as shown in Figure 4, and a plurality of through holes 9b are axially provided on this actuator arm 9a. The inner diameter of this through hole 9b is slightly, e.g., about several microns, larger than the outer diameter of the boss 10e.

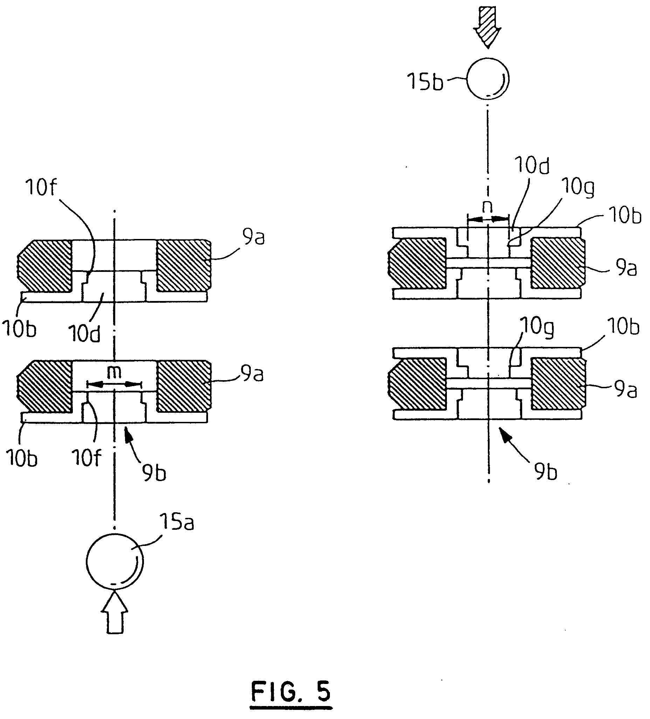

A method for attaching the suspension 10 to an actuator 9 will now be described. In each opening end of the through hole of an actuator arm 9a, as shown in Figure 5, a boss 10f of the mount plate 10b is inserted into one face of the through hole 9b. The inner diameter of the boss 10f of this mount plate 10b is m. And from the through hole 10d in the mount plate 10b, a steel ball 15a of a slightly larger diameter than the inner diameter m of the boss 10f is pressed in the direction from DOWN to UP, penetrates the through hole 9b in the actuator arm 9a, and goes from the through hole 10b. At this time, the boss 10f is expanded, the outer surface is fastened by pressure to the inner surface of the through hole 9b in the actuator arm 9a, and the boss 10f is fixed.

Next, on another face of the through hole 9b, a boss 10g in the mount plate 10b of the suspension 10 is inserted. The inner diameter of the boss 10g in the mount plate 10b to be used in this time is n and n < m. And from the through hole 10d in the mount plate 10b, a steel ball 15b of a slightly larger diameter than the inner diameter n of the boss 10g is pressed in the direction from UP to DOWN, penetrates the through hole 9b in the actuator arm 9a, and goes from the through hole 10d. At this time, the boss 10g is expanded, the outer surface is fastened by pressure to the inner surface of the through hole 9b in the actuator arm 9a, and the boss 10g is fixed.

According to this assembly structure and method, the diameter of a ball to be let through at the second time is small enough to apply no pressure to the mount plate caulked by the first penetration and so the mount plate caulked at the first penetration generates no deformation due to the second time penetration of a ball. Thus, the mount plate caulked at the first penetration generates no change in load.

The description has referred to a configuration having a structure in which opposed sliders 8 are attached with the actuator arm sandwiched therebetween as shown in Figure 4. However, the present invention is not limited to such a structure but may be applicable also to a structure in which opposed sliders are attached to the opposed faces of the actuator arm as shown in Figure 6, and causes a similar effect.

In the described embodiment, an example of connecting a mount plate to the suspension for fixation is illustrated. However, such a structure is not always required, and the invention is applicable to any of the constructions in which a plurality of suspensions are fixed to the actuator.

Thus, in a structure for attaching a plurality of suspensions to the actuator by swaging, the preferred embodiment of the present invention makes it possible to suppress the variance of changes in load with swage and to suppress the change in the flying height of a slider, so that a fall in the read/write characteristic of a magnetic disk is prevented, thereby enabling a stable attachment of suspensions to the actuator to be achieved.

## Claims

1. A disk drive system comprising:
a disk (7) with a recording surface;
a suspension (10) arranged to support at one end a signal conversion head for writing/reading data to/from the recording surface; and
an actuator (9) for attaching the other end of said suspension thereto and for positioning said signal conversion head at a desired position on said recording surface;
the system further comprising:
a structure for attaching the suspension (10) to the actuator (9), a boss having an opening formed in said other end of the suspension being inserted into an opening formed on an actuator arm forming a suspension assembly portion of said actuator (9), said suspension being fixed to said actuator arm by swaging, wherein the inner diameter of an opening formed in said boss for swaging differs in the opposed face of said actuator arm to which said suspension is attached.

2. A system as claimed in Claim 1, wherein said boss is formed on a mount plate connected and fixed to said suspension.

3. A system as claimed in Claim 1 or Claim 2, wherein said actuator has a plurality of actuator arms, said actuator openings being coaxially provided in the actuator arms, and said suspension being attached to said plurality of openings.

4. A method of constructing a disk drive system having a disk (7) with a recording surface, a suspension (10) arranged to support at one end a signal conversion head for writing/reading data to/from the recording surface, and an actuator (9) for attaching the other end of the suspension (10) thereto, and for positioning said signal conversion head at a desired position on said recording surface, the method comprising the steps of:
inserting a boss having an opening of a first inner diameter formed at said other end of a first suspension into a first face side of an opening formed on an actuator arm, the actuator arm forming a suspension attaching portion of said actuator;
passing a first object having a slightly larger diameter than said first inner diameter through the boss of said first diameter to fix said suspension to said actuator arm;
inserting a boss having an opening of a second inner diameter smaller than the first diameter formed at said other end of a second suspension into a second face opposite the first face of an opening formed on the actuator arm; and
passing a second object having a slightly larger diameter than said second inner diameter through the boss of said second diameter to fix said suspension to said actuator arm.

5. A method as claimed in Claim 4, wherein said actuator has two or more actuator arms with openings coaxially formed on said actuator, the method further comprising the steps of:
inserting bosses formed on said other end of a plurality of said first suspensions into one face of openings in said plurality of actuator arms and passing a first object having a slightly larger diameter than said first diameter through openings of said plurality of bosses to fix the plurality of first suspensions; and
inserting bosses formed on said other end of a plurality of second suspensions into faces of openings opposite a fixed face of said first suspension for each of said plurality of actuator arms and passing a second object having a slightly larger diameter than said second inner diameter through openings of said plurality of bosses to fix said plurality of second suspensions.

6. A method as claimed in Claim 4 or Claim 5, comprising the initial steps of:
connecting the first suspension to a first mount plate having the boss of said first inner diameter; and
connecting the second suspension to a second mount plate having the boss of said second inner diameter smaller than the first inner diameter.

7. A method as claimed in any of Claims 4 to 6, in which the first and second objects are balls.
